# FASCICULE DE BREVET EUROPEEN

(11) **EP 1 545 915 B1**
(45) Date de publication et mention de la délivrance du brevet: **19.03.2008**
(21) Numéro de dépôt: 03798953.0
(22) Date de dépôt: 02.10.2003
(51) Int. Cl.: B60H 1/00, B60L 11/18, H01M 8/06, H01M 8/04

(54) **PROCEDE ET DISPOSITIF DE RECUPERATION D ENERGIE A BORD D'UN VEHICULE EQUIPE D'UNE PILE A COMBUSTIBLE A REFORMEUR**
ENERGIERÜCKGEWINNUNGSVERFAHREN UND -VORRICHTUNG, DAS BZW. DIE AN BORD EINES FAHRZEUGS MIT EINER REFORMER-BRENNSTOFFZELLE VERWENDET WERDEN
ENERGY-RECOVERY METHOD AND DEVICE USED ON BOARD A VEHICLE COMPRISING A REFORMER FUEL CELL

(30) Priorité: 03.10.2002 FR 0212258
(43) Date de publication de la demande: 29.06.2005
(73) Titulaire: RENAULT S.A.S., 92100 Boulogne Billancourt (FR)
(72) Inventeur: BEGUERY, Patrick, F-78330 Fontenay Le Fleury (FR); DEWAELE, Gilles, F-92500 Rueil Malmaison (FR); KERETLI, Fahri, F-78320 Le Mesnil St-Denis (FR)
(86) Numéro de dépôt international: PCT/FR2003/002891
(87) Numéro de publication internationale: WO 2004/030958

(56) Documents cités:
- WO-A-01/89015
- WO-A-02/36385
- DE-A- 19 732 117

## Description

L'invention concerne un procédé de récupération de l'énergie électrique dans un véhicule automobile mu par au moins un moteur électrique.

L'invention concerne plus particulièrement un procédé de récupération de l'énergie électrique dans un véhicule automobile mu par au moins un moteur électrique, du type qui comporte une pile à combustible qui alimente le moteur électrique et des équipements électriques, et qui est alimentée en carburant, et notamment en hydrogène, par l'intermédiaire d'un reformeur dont le débit de carburant est commandé en fonction de la consommation électrique du moteur électrique, et qui produit temporairement un excès de carburant lorsque la consommation du moteur électrique diminue, et du type qui comporte des moyens de stockage d'énergie.

Les véhicules mus par au moins un moteur électrique peuvent notamment être alimentés en énergie électrique par une pile à combustible.

Une pile à combustible est constituée principalement de deux électrodes, une anode et une cathode, qui sont séparées par un électrolyte. Ce type de pile permet la conversion directe en énergie électrique de l'énergie produite par les réactions d'oxydo-réduction suivantes :
- une réaction d'oxydation d'un combustible, ou carburant, qui alimente l'anode en continu ; et
- une réaction de réduction d'un comburant qui alimente la cathode en continu.

Les piles à combustible utilisées pour fournir de l'énergie électrique à bord de véhicules automobiles sont généralement du type à électrolyte solide, notamment à électrolyte en polymère. Une telle pile utilise notamment de l'hydrogène (H₂) et de l'oxygène (O₂) en guise de carburant et de comburant respectivement.

Ce type de pile permet d'obtenir à la fois un rendement un temps de réaction et une température de fonctionnement globalement satisfaisants pour fournir de l'électricité à un moteur électrique pour la propulsion d'un véhicule automobile.

Contrairement aux moteurs thermiques qui rejettent avec les gaz d'échappement une quantité non négligeable de substances polluantes, la pile à combustible offre notamment l'avantage de ne rejeter que de l'eau qui est produite par la réaction de réduction à la cathode. De plus, une pile du type décrit précédemment peut utiliser de l'air ambiant dont l'oxygène (O₂) est réduit.

La cathode comporte généralement une entrée qui permet l'alimentation continue en oxygène (O₂) ou en air, et une sortie qui permet l'évacuation du surplus d'air ou d'oxygène (O₂) ainsi que l'évacuation de l'eau produite lors de la réduction de l'oxygène (O₂). De façon générale, l'anode comporte généralement une entrée par laquelle est introduit de l'hydrogène (H₂).

Cependant, dans l'état actuel de la technique, le stockage d'hydrogène pur (H₂) à bord du véhicule nécessite un volume trop important pour obtenir une autonomie confortable. De plus, la logistique de distribution de l'hydrogène (H₂) n'est pas encore répandue géographiquement.

Pour résoudre ces problèmes, il est connu de produire de l'hydrogène (H₂) directement à bord du véhicule à partir d'hydrocarbures, notamment de combustibles conventionnels tels que l'essence ou le gaz naturel. L'hydrogène (H₂) est extrait de l'essence lors d'une opération dite de reformage qui nécessite un dispositif appelé reformeur.

L'essence est injectée dans le reformeur avec de l'eau et de l'air. Le produit du reformage est un gaz appelé reformât qui est principalement composé d'hydrogène (H₂), de monoxyde de carbone (CO), de dioxyde de carbone (CO₂), d'oxygène (O₂) et d'azote (N₂). Le reformeur comporte généralement un brûleur qui fournit l'énergie calorifique nécessaire pour maintenir le reformeur à une température de fonctionnement. L'anode de la pile est ensuite directement alimentée en reformât par le reformeur.

La puissance électrique produite par la pile à combustible est proportionnelle aux débits de comburant et de carburant injectés à la cathode et à l'anode, respectivement. Pour commander la puissance électrique que la pile doit fournir au moteur électrique, il est donc connu de faire varier les débits de comburant et de carburant qui alimentent la pile. Ainsi, le débit de carburant injecté à l'anode est régulé en commandant le reformeur.

Cependant, le temps de réponse du reformeur entre l'instant auquel une variation de débit de carburant est requise pour faire varier la production de courant de la pile à combustible, et l'instant auquel le débit de carburant varie effectivement est de l'ordre de plusieurs secondes, comme le présente les documents DE19733117, EP1286405 et WO02/36385

Ainsi, lorsque le moteur électrique requiert une plus grande puissance électrique, la pile ne peut fournir la puissance électrique requise qu'après un temps de réponse de plusieurs secondes, le temps pour le reformeur de produire le débit de reformât adéquat.

De même, lorsque le moteur requiert moins d'électricité, le reformeur continue pendant quelques secondes à produire un débit de reformât superflu qui n'est pas consommé par la pile à combustible.

Pour pallier l'insuffisance temporaire de puissance électrique due au temps de latence du reformeur lorsque le moteur requiert une augmentation rapide d'électricité, il est connu d'alimenter temporairement le moteur électrique grâce à au moins une batterie auxiliaire.

Pour limiter le nombre de batteries implantées dans le véhicule, il est connu de récupérer de l'énergie lors des décélérations du véhicule et de stocker cette énergie récupérée dans les batteries. Une telle solution est notamment décrite et représentée dans le document EP-A-0.640.503.

Ce document propose un procédé de récupération de l'énergie produite par le moteur de traction lorsque celui-ci fonctionne en générateur de courant, c'est-à-dire, lorsque le véhicule décélère, le moteur n'étant plus alimenté en électricité.

De plus, lorsque la batterie ne peut plus stocker de courant, ce document propose de stocker l'énergie récupérée excédentaire grâce à des moyens de stockage tels qu'un accumulateur thermique.

Cependant, le fonctionnement du moteur électrique en générateur électrique agit comme un frein moteur sur le véhicule. Pour des raisons de confort de conduite et de sécurité des passagers, le frein moteur doit pouvoir être commandé et son action limitée.

L'énergie récupérée dans ces conditions doit donc être régulée pour les raisons de sécurité des passagers du véhicule décrites ci-dessus. Il n'est donc pas possible de récupérer la totalité de l'énergie que peut produire le moteur dans ces conditions.

De plus, l'énergie que peut potentiellement fournir la pile à combustible grâce au surplus de reformât produit par le reformeur lors de baisse de demande en électricité du moteur n'est pas exploitée.

Pour résoudre ces problèmes, la présente invention propose un procédé du type décrit précédemment, caractérisé en ce qu'il comporte les étapes suivantes :
- a) une étape de bilan au cours de laquelle la puissance électrique potentielle que la pile à combustible est susceptible de fournir instantanément est calculée en fonction du débit de carburant produit par le reformeur, et au cours de laquelle les puissances électriques consommées instantanément par le moteur électrique et par les équipements sont estimées ; et
- b) une étape de calcul de la puissance électrique excédentaire qui est le résultat de la différence entre ladite puissance électrique potentielle et la somme des puissances électriques consommées estimées ; et
- c) une étape de détermination de la capacité instantanée de stockage de puissance électrique des moyens de stockage qui est déclenchée lorsque la puissance électrique excédentaire est strictement positive ;
- d) une étape de stockage qui est déclenchée lorsque la capacité instantanée de stockage est supérieure ou égale à la puissance électrique excédentaire, au cours de laquelle la pile à combustible est alimentée par la totalité de l'excès de carburant et au cours de laquelle la puissance électrique excédentaire est stockée dans les moyens de stockage ;
- e) une étape de répartition de l'excès de carburant, qui est déclenchée lorsque la capacité de stockage est inférieure à la puissance électrique excédentaire, au cours de laquelle la pile à combustible est alimentée avec une portion de l'excès de carburant suffisante pour reconstituer les stocks d'énergie des moyens de stockage.

Selon d'autres caractéristiques de l'invention :
- le procédé comporte entre l'étape de calcul b) et l'étape de détermination c) une étape intermédiaire de freinage récupératif b') qui est déclenchée lorsque la puissance électrique consommée par le moteur électrique est nulle, le moteur électrique étant alors susceptible de fonctionner en générateur de courant électrique, et au cours de laquelle la puissance électrique susceptible d'être produite par le moteur électrique est estimée, puis additionnée à ladite puissance électrique excédentaire ;
- lors des étapes de stockage d) et de répartition e), la puissance électrique produite par le moteur électrique est stockée dans les moyens de stockage prioritairement par rapport à la puissance excédentaire produite par la pile à combustible ;
- la portion restante dudit excès de carburant est brûlée ;
- la portion restante dudit excès de carburant est stockée dans un réservoir ;
- les moyens de stockage comportent des batteries électriques ;
- les moyens de stockage comportent un accumulateur thermique dans lequel la puissance électrique excédentaire est stockée sous forme d'énergie calorifique par l'intermédiaire d'un dispositif frigorifique à compression ;
- les moyens de stockage comportent un récipient contenant un fluide et dans lequel l'énergie est stockée sous forme d'énergie mécanique par l'intermédiaire d'une pompe qui modifie la pression du fluide.

L'invention concerne en outre un dispositif de récupération de l'énergie électrique dans un véhicule automobile mu par au moins un moteur électrique, du type qui comporte une pile à combustible qui alimente le moteur électrique et des équipements électriques, et qui est alimentée en carburant, et notamment en hydrogène (H₂), par l'intermédiaire d'un reformeur dont le débit de carburant est commandé en fonction de la consommation électrique (Pₘₒₜ⁻) du moteur électrique, et qui produit temporairement un excès de carburant lorsque la consommation (Pₘₒₜ⁻) du moteur électrique diminue, et du type qui comporte des moyens de stockage d'énergie, caractérisé en ce qu'il régule l'énergie récupérée excédentaire produite par le moteur de traction et l'énergie fournie par la pile à combustible grâce au surplus de reformât produit par le reformeur.

D'autres caractéristiques et avantages de l'invention apparaîtront au cours de la lecture de la description détaillée qui suit pour la compréhension de laquelle on se reportera aux figures annexées parmi lesquelles :
- la figure 1 représente schématiquement un véhicule automobile mu par un moteur électrique et équipé d'une installation de production d'électricité et de moyens de stockage d'énergie selon les enseignements de l'invention ;
- la figure 2 est un schéma détaillant l'installation de production d'électricité représentée à la figure 1 ;
- la figure 3 est un diagramme représentant les étapes principales du procédé réalisé selon les enseignements de l'invention.

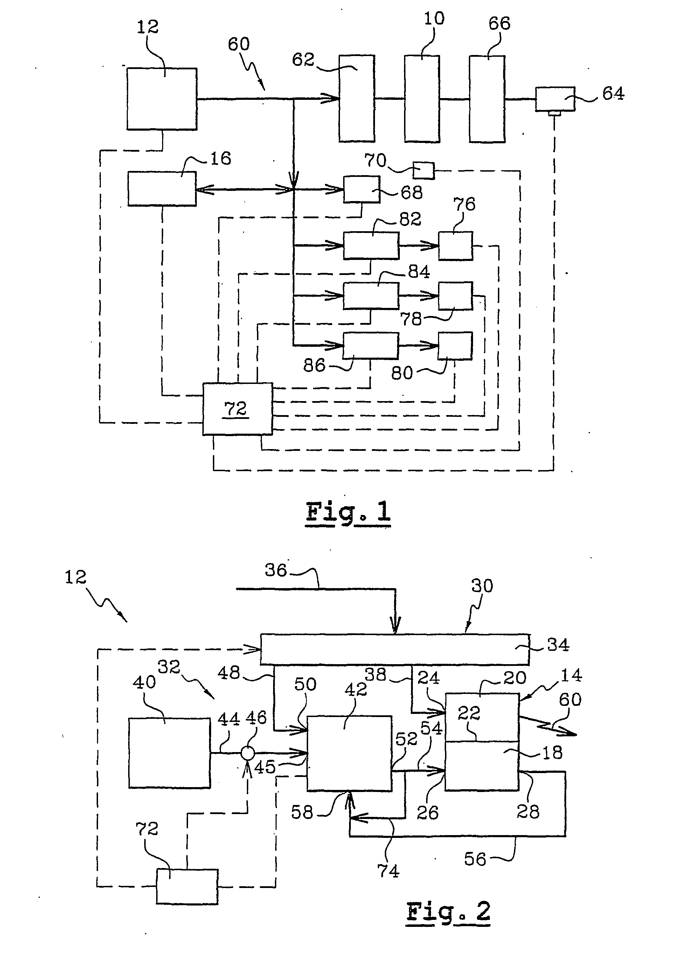

On a représenté schématiquement à la figure 1 un véhicule qui est ici mu par un moteur électrique 10 qui est principalement alimenté par une installation de production d'électricité 12 embarquée à bord du véhicule. L'installation de production d'électricité 12 comporte notamment une pile à combustible 14, représentée à la figure 2.

Le véhicule comporte aussi une batterie auxiliaire de traction 16 qui est destinée à suppléer à l'installation de production d'électricité 12 lors de conditions de fonctionnement du véhicule qui seront expliquée en détail dans la suite de cette description.

Nous allons maintenant décrire en détail l'installation de production d'électricité 12 qui est représentée à la figure 2.

La pile à combustible 14 fournit de l'électricité lorsqu'elle est alimentée en comburant et en carburant. La pile à combustible 14 comporte une anode 18 et une cathode 20 qui sont ici séparées par une membrane en polymère 22 formant électrolyte.

La cathode 20 comporte un orifice d'alimentation cathodique 24 par lequel elle est alimentée en comburant, qui est ici de l'air.

De même, l'anode 18 comporte un orifice d'alimentation anodique 26 par lequel elle est alimentée en carburant, qui est ici un reformât notamment constitué d'hydrogène (H₂), et elle comporte un orifice d'évacuation anodique 28 par lequel le carburant, ou le reformât, résiduel est évacué.

L'installation 12 comporte un premier circuit d'alimentation 30 de la cathode 20 en comburant, et notamment en air, et elle comporte un second circuit d'alimentation 32 de l'anode 18 en carburant, et notamment en hydrogène (H₂).

Le premier circuit d'alimentation 30 de la cathode 20 se compose notamment d'un module d'admission d'air atmosphérique 34 dans lequel l'air atmosphérique est admis via un tronçon d'entrée 36, et qui alimente la cathode 20 en air par l'intermédiaire d'une conduite' d'alimentation cathodique 38 qui est raccordée à l'orifice d'alimentation cathodique. 24. Le module d'admission d'air 34 est notamment destiné à réguler le débit d'air admis dans la cathode 20.

Le second circuit d'alimentation 32 de l'anode 18 se compose principalement d'un réservoir 40 contenant un hydrocarbure tel que de l'essence, et d'un reformeur 42.

Une tubulure d'alimentation en hydrocarbure 44 est raccordée par une première extrémité au réservoir 40 et par une seconde extrémité à un orifice d'entrée 45 du reformeur 42. Une pompe à hydrocarbure 46 qui est intercalée dans la tubulure d'alimentation 44 en hydrocarbure, est destinée à aspirer l'hydrocarbure contenu dans le réservoir 40 vers le reformeur 42. Un tronçon d'alimentation en air 48 est raccordée par une première extrémité au module d'admission d'air 34 et par une seconde extrémité à un orifice d'admission 50 d'air du reformeur 42.

Le reformeur 42 est ici destiné à extraire l'hydrogène (H₂) contenu dans l'hydrocarbure. A cette fin, le reformeur 42 doit notamment être alimenté en air qui est acheminé jusqu'au reformeur 42 via le tronçon d'alimentation en air 48.

Après extraction de l'hydrogène (H₂), il rejette par un orifice de sortie 52 un carburant, ou reformât, contenant de l'hydrogène (H₂) dans une tubulure d'alimentation 54 de l'anode 18 qui est raccordée à l'orifice d'alimentation anodique 26.

Lors du fonctionnement de la pile à combustible 14, l'anode 18 consomme une partie de l'hydrogène (H₂) contenue dans le reformât, le reformât résiduel étant rejeté par l'orifice d'évacuation anodique 28.

L'orifice d'évacuation anodique 28 débouche dans une tubulure, d'évacuation anodique 56 qui conduit le reformât résiduel jusqu'à un orifice d'alimentation 58 d'un brûleur (non représenté) qui est intégré au reformeur 42. Le brûleur est notamment destiné à consumer le reformât résiduel de façon à fournir de la chaleur nécessaire au fonctionnement du reformeur 42.

L'installation de production d'électricité 12 alimente ainsi en énergie électrique un circuit électrique 60 du véhicule qui alimente en électricité notamment le moteur électrique 10 par l'intermédiaire d'un onduleur 62. Le circuit électrique 60 est représenté en traits fléchés continus à la figure 1.

Le moteur électrique 10 ainsi alimenté convertit la puissance électrique reçue en couple moteur qui est ensuite transmis aux roues 64 du véhicule par l'intermédiaire d'un mécanisme de transmission 66.

L'installation de production d'électricité 12 alimente aussi des équipements électriques 68 du véhicule, tels que par exemple des phares ou des essuie-glaces.

La puissance électrique qui est fournie par la pile à combustible 14 et qui est requise pour le moteur électrique 10 et/ou pour les équipements électriques 68, est susceptible de varier selon les conditions de roulement et/ou selon les ordres du conducteur du véhicule. Le conducteur dispose en effet d'un dispositif de commande de l'accélération 70 du véhicule tel qu'une pédale d'accélération.

La puissance électrique fournie par la pile à combustible 14 est proportionnelle aux débits de carburant et de comburants injectés à l'anode 18 et à la cathode 20. Or, le débit de carburant injecté à l'anode 18 est produit par le reformeur 42.

Le véhicule comporte une unité de commande électronique 72 qui commande donc d'une part le débit d'air à la cathode 20 par l'intermédiaire du module d'admission d'air 34, et qui commande d'autre part le débit de carburant à l'anode 18 en régulant le débit d'hydrocarbure, par l'intermédiaire de la pompe à hydrocarbure 46, d'air et d'eau admis dans le reformeur 42.

Les connexions entre l'unité de commande électronique 72 et les différents organes du véhicule sont représentées en traits discontinus aux figures 1 et 2.

Ainsi, lorsque le conducteur requiert pour le moteur électrique 10 une plus grande puissance électrique, l'unité de commande électronique 72 commande le module d'admission d'air 34 et la pompe à hydrocarbure 46 de façon à adapter les débits de comburant et de carburant à la production de puissance électrique requise.

Cependant, le reformeur 42 ne peut répondre à cette commande qu'après un temps de latence non négligeable qui est par exemple de l'ordre de quelques secondes. En effet, l'unité de commande électronique 72 commande les débits d'hydrocarbure, d'air et d'eau qui sont admis dans le reformeur 42. Le temps de latence est le temps nécessaire au reformeur 42 pour transformer l'hydrocarbure, l'air et l'eau en reformât. Ainsi, la variation du débit d'hydrocarbure par l'unité de commande électronique 72 ne se répercute sur le débit de carburant en sortie du reformeur 42 qu'une fois que le temps de latence est écoulé. Durant ce temps de latence et lorsque l'unité de commande électronique 72 requiert une baisse du débit de carburant, le reformeur 42 continue à produire un surplus de carburant.

L'installation de production d'électricité 12 comporte donc une conduite de déviation 74 du surplus de carburant qui est raccordée par sa première extrémité à la conduite d'alimentation cathodique 38 et qui est raccordée par sa deuxième extrémité au brûleur du reformeur 42. Cette conduite de déviation 74 est notamment destinée à dévier le surplus de carburant directement vers le brûleur afin que le surplus de carburant soit brûlé.

De plus, la batterie auxiliaire de traction 16 est destinée à suppléer temporairement à l'installation de production d'électricité 12 lorsque le moteur électrique 10 requiert une augmentation de puissance électrique. La batterie auxiliaire 16 est connectée électriquement au moteur électrique 10 ainsi qu'aux équipements électriques 68 par l'intermédiaire du circuit électrique 60.

Outre l'électricité normalement fournie par l'installation de production d'électricité 12 en fonction du besoin instantané en énergie électrique du véhicule, le véhicule peut temporairement fournir un surplus d'énergie électrique

Ainsi, le moteur électrique 10 du véhicule est susceptible de fonctionner en générateur de courant électrique lorsque le véhicule est en phase de décélération et que le moteur électrique 10 n'est pas alimenté en courant électrique. Le moteur qui est alors entraîné en rotation par les roues 64 via le mécanisme de transmission 66 peut alors fournir du courant électrique.

Cependant, la production d'énergie électrique par le moteur électrique 10 agit sur le véhicule comme un frein. Afin de ne pas surprendre le conducteur et de rendre prédictible la décélération du véhicule, le fonctionnement du moteur électrique 10 en générateur est donc régulé par l'unité de commande électronique 72.

Le surplus de carburant qui est produit par le reformeur 42 lorsque la puissance électrique requise pour le moteur est en baisse, est traditionnellement destiné à être directement réinjecté dans le reformeur 42 pour être brûlé. Cependant, l'invention propose un procédé pour récupérer au moins une partie de l'énergie que la pile à combustible 14 est susceptible de fournir à partir de ce surplus de carburant.

Dans la suite de la description, la puissance électrique qui est susceptible d'être fournie à bord du véhicule mais qui n'est pas consommable instantanément par le moteur électrique 10 et/ou les équipements électriques 68 sera qualifiée de puissance électrique « récupérée ».

Le véhicule comporte différents dispositifs qui sont susceptibles d'emmagasiner sous différentes formes l'énergie électrique récupérée.

Dans ce mode de réalisation, le véhicule comporte notamment un accumulateur thermique 76, un accumulateur de pression 78, un accumulateur de vide 80, et la batterie auxiliaire de traction 16.

Le stockage de l'énergie électrique dans un accumulateur thermique 76 est notamment décrit et représenté dans la demande de brevet français N° 01-01720. L'accumulateur thermique 76 fait ici partie d'un dispositif de climatisation (non représenté) du véhicule. L'énergie électrique récupérée est notamment utilisée pour faire fonctionner un compresseur 82 du dispositif de climatisation qui, au lieu de refroidir l'habitacle du véhicule, refroidit l'accumulateur thermique 76. Le froid ainsi stocké est destiné à être utilisé ultérieurement par le dispositif de climatisation qui ne nécessite alors moins d'énergie électrique pour fonctionner.

L'accumulateur de pression 78 est ici intégré à un dispositif de direction assistée (non représenté) comprenant notamment un groupe électro-pompe hydraulique 84. L'électricité récupérée est ici utilisée pour faire fonctionner l'électro-pompe 84 qui comprime un fluide contenu dans l'accumulateur de pression 78. L'énergie électrique est ainsi convertie en énergie mécanique qui est stockée dans l'accumulateur de pression 78.

L'accumulateur de vide 80 est ici intégré à un dispositif d'assistance au freinage (non représenté) du véhicule qui comprend une pompe à vide 86. L'électricité récupérée est utilisée pour alimenter la pompe à vide 86 qui aspire un fluide contenu dans l'accumulateur de vide 80. L'énergie électrique est ainsi convertie en énergie mécanique qui est stockée dans l'accumulateur de vide 80.

L'électricité récupérée est aussi susceptible d'être stockée directement dans la batterie auxiliaire de traction 16.

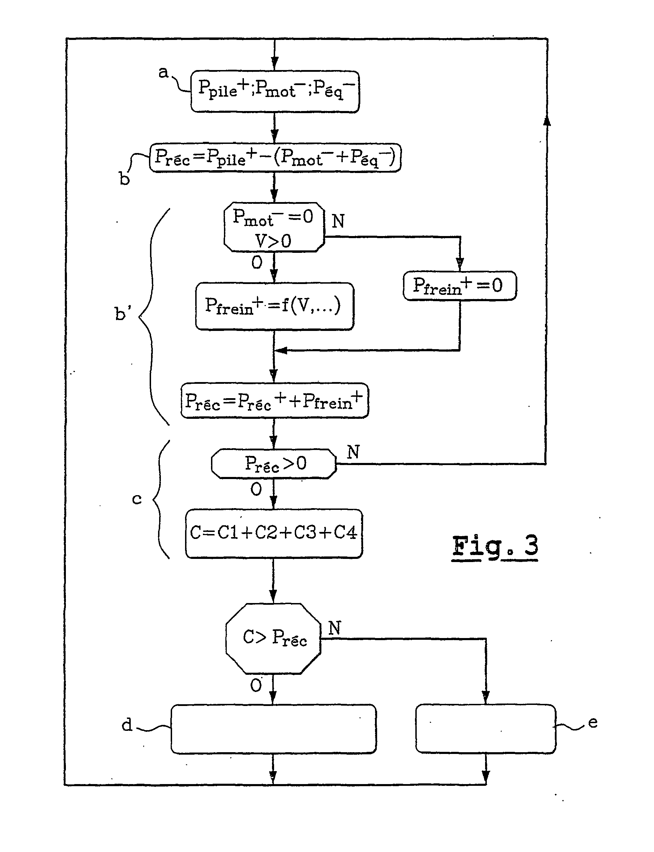

Nous allons maintenant décrire en détail le procédé de récupération et de stockage d'énergie selon les enseignements de l'invention en référence à la figure 3 et mettant en oeuvre les organes du véhicule précédemment décrits.

Le procédé comporte principalement les étapes suivantes :
- a) une étape de bilan au cours de laquelle la puissance électrique potentielle Pₚᵢₗₑ⁺ que la pile à combustible 14 est susceptible de fournir instantanément est calculée en fonction du débit de carburant produit par le reformeur 42, et au cours de laquelle les puissances électriques consommées instantanément par le moteur électrique 10 Pₘₒₜ⁻ et par les équipements 68 P_{éq}⁻ sont estimées ; et
- b) une étape de calcul de la puissance électrique récupérable, ou excédentaire, P_{réc} qui est le résultat de la différence entre ladite puissance électrique potentielle Pₚᵢₗₑ⁺ et la somme des puissances électriques consommées estimées (Pₘₒₜ⁻ + P_{éq}⁻) ; et
- b') une étape intermédiaire de freinage récupératif qui est déclenchée lorsque la puissance électrique consommée par le moteur électrique 10 Pₘₒₜ⁻ est nulle, le moteur électrique 10 étant alors susceptible de fonctionner en générateur de courant électrique, et au cours de laquelle la puissance électrique susceptible d'être fournie par le moteur électrique 10 P_{frein}⁺ est estimée, puis additionnée à ladite puissance électrique récupérable P_{réc}.
- c) une étape de détermination de la capacité instantanée de stockage C de puissance électrique des moyens de stockage qui est déclenchée lorsque la puissance électrique excédentaire P_{réc} est strictement positive ;
- d) une étape de stockage qui est déclenchée lorsque la capacité instantanée de stockage C est supérieure ou égale à la puissance électrique excédentaire P_{réc}, au cours de laquelle la pile à combustible 14 est alimentée par la totalité de l'excès de carburant et au cours de laquelle la puissance électrique excédentaire P_{réc} est stockée dans les moyens de stockage.
- e) une étape de répartition de l'excès de carburant, qui est déclenchée lorsque la capacité de stockage C est inférieure à la puissance électrique excédentaire P_{réc}, au cours de laquelle la pile à combustible 14 est alimentée avec une portion de l'excès de carburant suffisante pour reconstituer les stocks d'énergie des moyens de stockage.

Lors de l'étape a) du procédé, la puissance électrique instantanée Pₚᵢₗₑ⁺ que la pile à combustible 14 est susceptible de délivrer à partir du débit instantané de carburant fourni par le reformeur 42 est estimée et mémorisée par l'unité de commande électronique 72. Le débit de carburant est par exemple mesuré par un capteur adéquat qui est situé à la sortie du reformeur 42, la mesure étant ensuite transmise à l'unité de commande électronique 72.

La puissance électrique instantanée consommée Pₘₒₜ⁻ par le moteur électrique 10 est aussi estimée et mémorisée par l'unité de commande électronique 72, par exemple à partir de la position de la pédale d'accélération 70 actionnée par le conducteur.

Enfin, la puissance électrique instantanée consommée P_{éq}⁻ par les équipements électriques 68 du véhicule est estimée et mémorisée par l'unité de commande électronique 72 à partir de mesures qui sont effectuées par différents capteurs (non représentés), puis qui sont envoyées à l'unité de commande électronique 72 par l'intermédiaire de connexions électriques.

Ensuite, lors de l'étape de calcul b) du procédé, la puissance électrique récupérable, ou excédentaire, P_{réc} qui est le résultat de la différence entre la puissance électrique potentielle Pₚᵢₗₑ⁺ et la somme des puissances électriques consommée estimées (Pₘₒₜ⁻ + P_{éq}⁻) est calculée par l'unité de commande électronique 72 à partir de ces trois types de valeurs mémorisées.

La puissance électrique excédentaire P_{réc} est en fait la puissance électrique que le véhicule est susceptible de récupérer à partir du surplus de carburant produit par le reformeur 42.

Si la valeur calculée est inférieure ou égale à zéro, le reformeur 42 ne fournit pas de carburant en excédant et la pile à combustible 14 n'est donc pas susceptible de fournir dé l'énergie électrique récupérable.

En revanche, si la valeur calculée est supérieure à zéro, c'est que le reformeur 42 fournit du carburant en excédent, et donc que de l'énergie électrique excédentaire est susceptible d'être fournie au véhicule par la pile à combustible 14.

Selon ce mode de réalisation de l'invention, quel que soit le résultat de l'étape b), il est nécessaire de déterminer si le véhicule est susceptible de produire de l'énergie par freinage récupératif.

Si la puissance électrique requise pour le moteur électrique 10 Pₘₒₜ⁻ est nulle et que la vitesse V du véhicule est strictement supérieure à zéro, le véhicule se trouve en situation de freinage récupératif. L'étape intermédiaire b') est donc enclenchée par l'unité de commande électronique 72 afin d'estimer la puissance électrique récupérable en situation de freinage récupératif P_{frein}⁺.

Sinon, on considère que le véhicule n'est pas en situation de freinage récupératif et l'étape c) est directement enclenchée par l'unité de commande électronique 72.

Lors de l'étape intermédiaire b'), la puissance électrique P_{frein}⁺ que le moteur électrique 10 est susceptible de fournir lors du freinage récupératif est estimée par l'unité de commande électronique 72. Cette estimation prend en compte la vitesse V du véhicule, ainsi que l'ergonomie et le confort des passagers. Cette puissance estimée P_{frein}⁺ est alors ajoutée à la puissance récupérable P_{réc} précédemment calculée. Cette somme constitue alors la nouvelle valeur de la puissance récupérable P_{réc} par le véhicule.

Ensuite, lors de l'étape c), un test est effectué par l'unité de commande électronique 72 pour déterminer si de l'énergie électrique est susceptible d'être récupéré dans le véhicule. Ainsi, si la puissance récupérable P_{réc} est strictement supérieure à un seuil qui a ici pour valeur zéro, l'unité de commande électronique 72 enclenche la suite de l'étape c). Sinon, c'est qu'il n'y a pas d'énergie électrique à récupérer, l'unité de commande électronique 72 interrompt et réinitialise donc le procédé.
la capacité instantanée de stockage C d'énergie à bord du véhicule est déterminée par l'unité de commande électronique 72.

Durant cette étape, la puissance électrique C1 qui peut être chargée dans la batterie auxiliaire de traction 16 est calculée par l'unité de commande électronique 72 en se basant par exemple l'état de charge de la batterie 16 et sa température.

Si le dispositif de climatisation est activé par le conducteur, mais que le compresseur de climatisation est à l'arrêt, et si l'accumulateur thermique 76 n'a pas atteint un seuil de température minimale de seuil, alors la puissance électrique C2 requise par le compresseur 82 du dispositif de climatisation afin de refroidir l'accumulateur thermique 76 jusqu'au seuil de température minimale est calculée par l'unité de commande électronique 72.

Si la pression à l'intérieur de l'accumulateur de vide 80 est supérieure à un seuil maximum de pression, la puissance électrique C3 requise par la pompe à vide 86 afin d'abaisser la pression dans l'accumulateur de vide 80 jusqu'au seuil de pression minimale est calculée par l'unité de commande électronique 72.

Si la pression à l'intérieur de l'accumulateur de pression 78 est inférieure à un seuil minimum de pression, la puissance électrique C4 requise par l'électro-pompe 84 afin d'élever la pression à l'intérieur de l'accumulateur de pression 78 jusqu'au seuil de pression maximale est calculée par l'unité de commande électronique 72.

La capacité instantanée de stockage C d'énergie à bord du véhicule est égale à la somme de ces puissances électriques (C1 + C2 + C3 + C4).

Enfin, la puissance électrique récupérable instantanément P_{réc} est comparée par l'unité de commande électronique 72 avec la capacité instantanée de stockage C.

Si la capacité de stockage C est supérieure à la puissance récupérable P_{réc}, alors l'étape de stockage d) est enclenchée. L'unité de commande électronique 72 commande le chargement des stocks d'énergie 16, 76, 78, 80 en utilisant l'énergie électrique fournie par le moteur électrique 10 et en alimentant la pile à combustible 14 avec la totalité du surplus de carburant.

Sinon, l'étape de répartition e) est enclenchée. Selon ce mode de réalisation de l'invention, l'unité de commande électronique 72 commande la répartition de la puissance électrique P_{frein}⁺ fournie par le moteur électrique 10 dans les différentes zones de stockage d'énergie du véhicule 16, 76, 78, 80.

Puis, si la capacité instantanée de stockage C est toujours supérieure à zéro, l'unité de commande électronique 72 commande l'alimentation de la pile à combustible 14 avec la quantité de carburant nécessaire pour recharger complètement les stocks d'énergie, le reste du surplus de carburant étant dévié directement vers le reformeur 42 par l'intermédiaire de la conduite de déviation 74 afin d'y être brûlé.

Sinon, le surplus carburant est totalement dévié vers le reformeur 42 par l'intermédiaire de la conduite de déviation 74 afin d'y être brûlé.

A la fin d'un cycle du procédé, toutes les valeurs sont réinitialisées à zéro et le procédé est réitéré jusqu'à l'arrêt total du véhicule.

Selon un autre mode de réalisation non représenté de l'invention, le surplus de carburant qui est dévié par la conduite de déviation 74, est conduit jusqu'à un réservoir de stockage temporaire du carburant.

## Revendications

1. Procédé de récupération de l'énergie électrique dans un véhicule automobile mu par au moins un moteur électrique (10), du type qui comporte une pile à combustible (14) qui alimente le moteur électrique (10) et des équipements électriques (68), et qui est alimentée en carburant, et notamment en hydrogène (H₂), par l'intermédiaire d'un reformeur (42) dont le débit de carburant est commandé en fonction de la consommation électrique (Pₘₒₜ⁻) du moteur électrique (10), et qui produit temporairement un excès de carburant lorsque la consommation (Pₘₒₜ⁻) du moteur électrique (10) diminue, et du type qui comporte des moyens de stockage d'énergie (16, 76, 78, 80),
**caractérisé en ce qu'**il comporte les étapes suivantes :
- a) une étape de bilan au cours de laquelle la puissance électrique potentielle (Pₚᵢₗₑ⁺) que la pile à combustible (14) est susceptible de fournir instantanément est calculée en fonction du débit de carburant produit par le reformeur (42), et au cours de laquelle les puissances électriques consommées instantanément (Pₘₒₜ⁻, P_{éq}⁻) par le moteur électrique (10) et par les équipements (68) sont estimées ; et
- b) une étape de calcul de la puissance électrique excédentaire (P_{réc}) qui est le résultat de la différence entre ladite puissance électrique potentielle (Pₚᵢₗₑ⁺) et la somme des puissances électriques consommées estimées (Pₘₒₜ⁻ + P_{éq}⁻) ; et
- c) une étape de détermination de la capacité instantanée de stockage (C) de puissance électrique des moyens de stockage (16, 76, 78, 80) qui est déclenchée lorsque la puissance électrique excédentaire (P_{réc}) est strictement positive ;
- d) une étape de stockage qui est déclenchée lorsque la capacité instantanée de stockage (C) est supérieure ou égale à la puissance électrique excédentaire (P_{réc}), au cours de laquelle la pile à combustible (14) est alimentée par la totalité de l'excès de carburant et au cours de laquelle la puissance électrique excédentaire (P_{réc}) est stockée dans les moyens de stockage (16, 76, 78, 80) ;
- e) une étape de répartition de l'excès de carburant, qui est déclenchée lorsque la capacité de stockage (C) est inférieure à la puissance électrique excédentaire (P_{réc}), au cours de laquelle la pile à combustible (14) est alimentée avec une portion de l'excès de carburant suffisante pour reconstituer les stocks d'énergie des moyens de stockage (16, 76, 78, 80).

2. Procédé selon la revendication précédente, **caractérisé en ce qu'**il comporte entre l'étape de calcul b) et l'étape de détermination c) une étape intermédiaire de freinage récupératif b') qui est déclenchée lorsque la puissance électrique (Pₘₒₜ⁻) consommée par le moteur électrique (10) est nulle, le moteur électrique (10) étant alors susceptible de fonctionner en générateur de courant électrique, et au cours de laquelle la puissance électrique (P_{frein}) susceptible d'être produite par le moteur électrique (10) est estimée, puis additionnée à ladite puissance électrique excédentaire (P_{réc}).

3. Procédé selon la revendication précédente, **caractérisé en ce que**, lors des étapes de stockage d) et de répartition e), la puissance électrique (P_{frein}) produite par le moteur électrique (10) est stockée dans les moyens de stockage (16, 76, 78, 80) prioritairement par rapport à la puissance excédentaire (Pₚᵢₗₑ⁺ - Pₘₒₜ⁻ - P_{éq}⁻) produite par la pile à combustible (14).

4. Procédé selon l'une des revendications précédentes, **caractérisé en ce que** la portion restante dudit excès de carburant est brûlée.

5. Procédé selon l'une des revendications 1 ou 2, **caractérisé en ce que** la portion restante dudit excès de carburant est stockée dans un réservoir.

6. Procédé selon l'une des revendications précédentes, **caractérisé en ce que** les moyens de stockage comportent des batteries électriques (16).

7. Procédé selon l'une des revendications précédentes, **caractérisé en ce que** les moyens de stockage comportent un accumulateur thermique (76) dans lequel la puissance électrique excédentaire (P_{réc}) est stockée sous forme d'énergie calorifique par l'intermédiaire d'un dispositif frigorifique à compression (82).

8. Procédé selon l'une des revendications précédentes, **caractérisé en ce que** les moyens de stockage comportent un récipient (78, 80) contenant un fluide et dans lequel l'énergie est stockée sous forme d'énergie mécanique par l'intermédiaire d'une pompe (84, 86) qui modifie la pression du fluide.

9. Dispositif de récupération de l'énergie électrique dans un véhicule automobile mu par au moins un moteur électrique (10), du type qui comporte une pile à combustible (14) qui alimente le moteur électrique (10) et des équipements électriques (68), et qui est alimentée en carburant, et notamment en hydrogène (H₂), par l'intermédiaire d'un reformeur (42) dont le débit de carburant est commandé en fonction de la consommation électrique (Pₘₒₜ⁻) du moteur électrique (10), et qui produit temporairement un excès de carburant lorsque la consommation (Pₘₒₜ⁻) du moteur électrique (10) diminue, et du type qui comporte des moyens de stockage d'énergie (16, 76, 78, 80), **caractérisé en ce qu'**il détermine la capacité instantanée de stockage (C) de puissance électrique des moyens de stockage (16, 76, 78, 80).

## Claims

1. Method for recovering electrical energy in a motor vehicle powered by at least one electric motor (10), of the type which comprises a fuel cell (14) which powers the electric motor (10) and electrical equipment (68) and which is supplied with fuel, and especially with hydrogen (H₂), via a reformer (42) the fuel flow rate of which is controlled as a function of the electrical power consumption (Pₘₒₜ⁻) of the electric motor (10) and which temporarily produces excess fuel when the power consumption (Pₘₒₜ⁻) of the electric motor (10) decreases, and of the type which comprises energy storage means (16, 76, 78, 80),
**characterized in that** it comprises the following steps:
a) an assessment step during which the potential electrical power (P_{cell}⁺) that the fuel cell (14) is capable of supplying instantaneously is calculated as a function of the flow rate of fuel produced by the reformer (42) and during which the electrical powers (Pₘₒₜ⁻, P_{eq}⁻) consumed instantaneously by the electric motor (10) and by the equipment (68) are estimated; and
- b) a step of calculating the excess electrical power (P_{rec}) which is the result of the difference between the said potential electrical power (P_{cell}⁺) and the sum of the estimated consumed electrical powers (Pₘₒₜ⁻ + P_{eq}⁻) ; and
- c) a step of determining the instantaneous electrical power storage capacity (C) of the storage means (16, 76, 78, 80) which step is triggered when the excess electrical power (P_{rec}) is strictly positive;
- d) a storage step which is triggered when the instantaneous storage capacity (C) is greater than or equal to the excess electrical power (P_{rec}) and during which the fuel cell (14) is supplied with all the excess fuel and during which the excess electrical power (P_{rec}) is stored in the storage means (16, 76, 78, 80) ;
- e) a step of distributing the excess fuel, which step is triggered when the storage capacity (C) is less than the excess electrical power (P_{rec}) and during which the fuel cell (14) is supplied with a sufficient proportion of the excess fuel that it can replenish the energy supplies of the storage means (16, 76, 78, 80).

2. Method according to the preceding claim, **characterized in that** it involves, between the calculation step (b) and the determining step (c) an intermediate step of recuperative braking (b') which is triggered when the electrical power (Pₘₒₜ⁻) consumed by the electric motor (10) is zero, the electric motor (10) then being capable of operating as an electrical current generator, and during which step the electrical power (P_{brake}) that can be produced by the electric motor (10) is estimated and then added to the said excess electrical power (P_{rec}).

3. Method according to the preceding claim, **characterized in that**, during the storage d) and distribution e) steps, the electrical power (P_{brake}) produced by the electric motor (10) is stored in storage means (16, 76, 78, 80) with priority over the excess power (P_{cell}⁺ - Pₘₒₜ⁻ - P_{eq}⁻) produced by the fuel cell (14).

4. Method according to one of the preceding claims, **characterized in that** the remaining proportion of the said excess fuel is burnt.

5. Method according to either of Claims 1 and 2, **characterized in that** the remaining proportion of the said excess fuel is stored in a reservoir.

6. Method according to one of the preceding claims, **characterized in that** the storage means comprise electric batteries (16).

7. Method according to one of the preceding claims, **characterized in that** the storage means comprise a heat accumulator (76) in which the excess electrical power (P_{rec}) is stored in the form of heat energy via a compression-type refrigeration device (82).

8. Method according to one of the preceding claims, **characterized in that** the storage means comprise a container (78, 80) containing a fluid and in which energy is stored in the form of mechanical energy by means of a pump (84, 86) which modifies the pressure of the fluid.

9. Device for recovering electrical energy in a motor vehicle powered by at least one electric motor (10), of the type which comprises a fuel cell (14) which powers the electric motor (10) and electrical equipment (68) and which is supplied with fuel, and especially with hydrogen (H₂), via a reformer (42) the fuel flow rate of which is controlled as a function of the electrical power consumption (Pₘₒₜ⁻) of the electric motor (10) and which temporarily produces excess fuel when the power consumption (Pₘₒₜ⁻) of the electric motor (10) decreases, and of the type which comprises energy storage means (16, 76, 78, 80), **characterized in that** it determines the instantaneous electrical power storage capacity (C) of the storage means (16, 76, 78, 80).

## Patentansprüche

1. Verfahren zur Wiedergewinnung der elektrischen Energie in einem Kraftfahrzeug, das von mindestens einem Elektromotor (10) von dem Typ angetrieben wird, der eine Brennstoffzelle (14), die den Elektromotor (10) speist, und elektrische Einrichtungen (68) aufweist und der mit Kraftstoff, und insbesondere Wasserstoff (H₂), über einen Reformer (42) gespeist wird, dessen Kraftstoffdurchsatz in Abhängigkeit vom Stromverbrauch (Pₘₒₜ⁻) des Elektromotors (10) gesteuert wird und der vorübergehend einen Kraftstoffüberschuss produziert, wenn der Verbrauch (Pₘₒₜ⁻) des Elektromotors (10) abnimmt, und von dem Typ, der Energiespeichermittel (16, 76, 78, 80) aufweist,
**dadurch gekennzeichnet, dass** es die folgenden Schritte aufweist:
a) einen Bilanzschritt, während dem die mögliche elektrische Leistung (P_{zelle}⁺) , die die Brennstoffzelle (14) augenblicklich liefern kann, in Abhängigkeit von der Kraftstoffmenge berechnet wird, die vom Reformer (42) produziert wird, und während dem die vom Elektromotor (10) und von den Einrichtungen (68) augenblicklich verbrauchten elektrischen Leistungen (Pₘₒₜ⁻, Pₑᵢₙ⁻) geschätzt werden; und
b) einen Schritt der Berechnung der überschüssigen elektrischen Leistung (P_{wiederg}), die das Ergebnis der Differenz zwischen der möglichen elektrischen Energie (P_{Zelle}⁺) und der Summe der geschätzten verbrauchten elektrischen Energien (Pₘₒₜ⁻ + Pₑᵢₙ⁻) ist, und
c) einen Schritt der Bestimmung der augenblicklichen Speicherkapazität (C) elektrischer Leistung der Speichermittel (16, 76, 78, 80), der ausgelöst wird, wenn die überschüssige elektrische Energie (P_{wiederg}) strikt positiv ist;
d) einen Speicherschritt, der ausgelöst wird, wenn die augenblickliche Speicherkapazität (C) größer als die oder gleich der überschüssigen elektrischen Leistung (P_{wiederg}) ist, während dem die Brennstoffzelle (14) mit dem ganzen Kraftstoffüberschuss gespeist wird, und während dem die überschüssige elektrische Leistung (P_{wiederg}) in den Speichermitteln (16, 76, 78, 80) gespeichert wird;
e) einen Schritt der verteilung des Kraftstoffüberschusses, der ausgelöst wird, wenn die Speicherkapazität (C) geringer als die überschüssige elektrische Leistung (P_{wiederg}) ist, während dem die Brennstoffzelle (14) mit einem ausreichenden Teil des Kraftstoffüberschusses gespeist wird, um die Energiebestände der Speichermittel (16, 76, 78, 80) wiederherzustellen.

2. Verfahren nach dem vorhergehenden Anspruch, **dadurch gekennzeichnet, dass** es zwischen dem Rechenschritt b) und dem Bestimmungsschritt c) einen zwischenschritt der Rückgewinnungsbremsung b') aufweist, der ausgelöst wird, wenn die vom Elektromotor (10) verbrauchte elektrische Energie (Pₘₒₜ⁻) Null ist, wobei der Elektromotor (10) dann in der Lage ist, als Stromgenerator zu arbeiten, und während dem die elektrische Leistung (P_{Bremse}) , die vom Elektromotor (10) produziert werden kann, geschätzt und dann zur überschüssigen elektrischen Energie (P_{wiederg}) addiert wird.

3. Verfahren nach dem vorhergehenden Anspruch, **dadurch gekennzeichnet, dass** während des Speicherschritts d) und des Verteilungsschritts e) die vom Elektromotor (10) produzierte elektrische Leistung (P_{Bremse}) in den Speichermitteln (16, 76, 78, 80) prioritär bezüglich der überschüssigen Leistung (P_{Zelle}⁺ - Pₘₒₜ⁻ - Pₑᵢₙ⁻) gespeichert wird, die von der Brennstoffzelle (14) produziert wird.

4. Verfahren nach einem der vorhergehenden Ansprüche, **dadurch gekennzeichnet, dass** der verbleibende Teil des Kraftstoffüberschusses verbrannt wird.

5. Verfahren nach einem der Ansprüche 1 und 2, **dadurch gekennzeichnet, dass** der verbleibende Teil des Kraftstoffüberschusses in einem Tank gespeichert wird.

6. Verfahren nach einem der vorhergehenden Ansprüche, **dadurch gekennzeichnet, dass** die Speichermittel elektrische Batterien (16) aufweisen.

7. Verfahren nach einem der vorhergehenden Ansprüche, **dadurch gekennzeichnet, dass** die Speichermittel einen Wärmespeicher (76) aufweisen, in dem die überschüssige elektrische Leistung (P_{wiederg}) in Form von Wärmeenergie mittels einer Kompressionskältevorrichtung (82) gespeichert wird.

8. Verfahren nach einem der vorhergehenden Ansprüche, **dadurch gekennzeichnet, dass** die Speichermittel einen Behälter (78, 80) aufweisen, der ein Fluid enthält und in dem die Energie in Form von mechanischer Energie mittels einer Pumpe (84, 86) gespeichert wird, die den Druck des Fluids verändert.

9. Vorrichtung zur Wiedergewinnung der elektrischen Energie in einem Kraftfahrzeug, das von mindestens einem Elektromotor (10) von dem Typ angetrieben wird, der eine Brennstoffzelle (14), die den Elektromotor (10) speist, und elektrische Einrichtungen (68) aufweist und der mit Kraftstoff, und insbesondere Wasserstoff (H₂), über einen Reformer (42) gespeist wird, dessen Kraftstoffdurchsatz in Abhängigkeit vom Stromverbrauch (Pₘₒₜ⁻) des Elektromotors (10) gesteuert wird und der vorübergehend einen Kraftstoffüberschuss produziert, wenn der verbrauch (Pₘₒₜ⁻) des Elektromotors (10) abnimmt, und von dem Typ, der Energiespeichermittel (16, 76, 78, 80) aufweist, **dadurch gekennzeichnet, dass** sie die augenblickliche Speicherkapazität (C) von elektrischer Energie der Speichermittel (16, 76, 78, 80) bestimmt.
